# EUROPEAN PATENT SPECIFICATION

(11) **EP 4 339 659 B1**
(45) Date of publication and mention of the grant of the patent: **25.11.2026**
(21) Application number: 23161334.0
(22) Date of filing: 10.03.2023
(51) Int. Cl.: G02B 5/00, H02S 10/30

(54) **THERMOPLASMONIC DEVICE, RESPECTIVE WIRELESS ENERGY TRANSFER SYSTEM AND RESPECTIVE OPERATION METHOD**
THERMOPLASMONISCHE VORRICHTUNG, ENTSPRECHENDES DRAHTLOSES ENERGIEÜBERTRAGUNGSSYSTEM UND ENTSPRECHENDES BETRIEBSVERFAHREN
DISPOSITIF THERMOPLASMONIQUE, SYSTÈME DE TRANSFERT D'ÉNERGIE SANS FIL RESPECTIF ET PROCÉDÉ DE FONCTIONNEMENT RESPECTIF

(30) Priority: 15.09.2022 PT 2022118195
(43) Date of publication of application: 20.03.2024
(73) Proprietor: Universidade do Porto, 4099-002 Porto (PT); CENTITVC - Centro de Nanotecnologia e Materiais Tecnicos, Funcionais e Inteligentes, 4760-034 Vila Nova de Famalicão (PT); INESC TEC - Instituto de Engenharia de Sistemas e Computadores, Tecnologia e Ciência, 4200-465 Porto (PT); Université de Limoges, 87032 Limoges (FR); Universidad de Vigo, 36310 Vigo (Pontevedra) (ES); CENTRE NATIONAL DE LA RECHERCHE SCIENTIFIQUE (CNRS), 75016 Paris (FR)
(72) Inventor: Trindade Pereira, André Miguel, 4169-007 Porto (PT); Mota Pires, Ana Lúcia, 4169-007 Porto (PT); dos Santos Maia, Maria Margarida, 4169-007 Porto (PT); Aves Silva, Joana, 4169-007 Porto (PT); Silva, José, 4760-034 Vila Nova de Famalicão (PT); Marques, António, 4760-034 Vila Nova de Famalicão (PT); Frazão, Orlando, 4200-465 Porto (PT); Robalinho, Paulo, 4200-465 Porto (PT); Jamier, Raphael, 87032 Limoges (FR); Leconte, Baptiste, 87032 Limoges (FR); Roy, Philippe, 87032 Limoges (FR); Auguste, Jean-Louis, 87032 Limoges (FR); Aguado Agelet, Fernando, 36310 Vigo Pontevedra (ES); Garcia Luís, Uxia, 36310 Vigo Pontevedra (ES); Gómez San Juan, Alejandro, 36310 Vigo Pontevedra (ES); Orgeira Crespo, Pedro, 36310 Vigo Pontevedra (ES); Dragos Darau, Vlad, 36310 Vigo Pontevedra (ES)
(74) Representative: Patentree

(56) References cited:
- WO-A2-2008/118234
- CN-A- 106 452 287
- CN-A- 106 788 213
- US-A1- 2015 288 318
- KANG EVAN S H ET AL: "Hybrid plasmonic metasurfaces", JOURNAL OF APPLIED PHYSICS, AMERICAN INSTITUTE OF PHYSICS, 2 HUNTINGTON QUADRANGLE, MELVILLE, NY 11747, vol. 126, no. 14, 8 October 2019 (2019-10-08), XP012241252, ISSN: 0021-8979, [retrieved on 20191008], DOI: 10.1063/1.5116885

## Description

### Technical domain

The present disclosure relates to a wireless energy transfer system and respective operation method. The present disclosure relates to a thermoplasmonic device for harvesting energy from incident light. It also relates to a wireless energy transfer system for transferring energy comprising the thermoplasmonic device and a light source for emitting incident light onto said device.

### Background

Wireless power transfer, wireless power transmission, wireless energy transmission, or electromagnetic power transfer are processes for the transmission of electrical energy without wires as a physical link. In a wireless power transmission system, a transmitter device, driven by electric power from a power source, generates a time-varying electromagnetic field, which transmits power across space to a receiver device, which extracts power from the field and supplies it to an electrical load. The technology of wireless power transmission can eliminate the use of the wires and batteries, thus increasing the mobility, convenience, and safety of an electronic device for all users. Wireless power transfer is useful to power electrical devices where interconnecting wires are inconvenient, hazardous, or are not possible.

Document KR101288433B1 discloses an apparatus for use in wireless energy transfer, which includes a first resonator structure configured to transfer energy non-radiatively with a second resonator structure over a distance greater than a characteristic size of the second resonator structure. The non-radiative energy transfer is mediated by a coupling of a resonant field evanescent tail of the first resonator structure and a resonant field evanescent tail of the second resonator structure.

Document US2015288318A1 discloses a new system and new devices comprising highly efficient meta material-based absorbers and emitters which may be employed in various energy harvesting applications compelling conditions, such as high temperatures. The employment of ceramic materials in such applications enable devices with longer lifetimes and improved performance. Specific geometric and structural designs, e.g., by arrangement of plasmonic and dielectric structures, of the metamaterials provide for efficient absorption of light within a broad spectral range and emission of that energy in a particular range via selective emitters which may, in turn, be coupled to other devices.

Document CN106452287A discloses an energy transfer device having a thermoplasmonic layer receiving electromagnetic energy and a thermoelectric layer connected to the thermoplasmonic layer via a honeycomb storage sandwich layer comprising a phase change energy storage composite material.

These facts are described to illustrate the technical problem solved by the embodiments of the present document.

### General Description

The present disclosure relates to a thermoplasmonic device as defined in claim 1, a wireless energy transfer system according to claim 6, and respective use as defined in claim 14.

The present disclosure relates to a wireless energy transfer system comprising a light source incident in a photo-thermoelectric plasmonic system composed of a thermoelectric generator, electrical contacts, a thermoplasmonic system, and a substrate, generating a temperature gradient and subsequently electrical energy by the photo-thermoelectric plasmonic effect.

The technology now disclosed aims at wirelessly harvesting energy from a focused or collimated light source, such as a high-power laser, a laser, a superluminescent light emitting diode, a light emitting diode, an organic light emitting diode, sun light and their combinations thereof.

It is disclosed a wireless energy transfer system powered by a light source incident in a photo-thermoelectric plasmonic system, converting the light into heat, and the heat into electrical energy, with the aim to be used in energy harvesting in remote places. The system has the capability of producing a potential voltage through a heat flow change created by the incidence of light due to the combination of two phenomena: thermoelectricity and thermoplasmonics. The photo-thermoelectric plasmonic system was produced using cost-effective components, regarding the thermoelectric generator, electrical contacts, thermoplasmonic system, and design. Through the combination of both phenomena allied with the advantages of the design, low-cost production, possibility to scale up and flexibility, it is possible, by small changes in the structure, to apply the system to a myriad of remote places to generate energy at long distances.

The wireless energy transfer system comprises a photo-thermoelectric plasmonic system that integrates two different mechanisms in a single device, such as the thermoplasmonic system, and the thermoelectric generator. The thermoplasmonic system is responsible for the heating of the system caused by the plasmonic resonance occurring in the plasmonic system that absorbs and resonates, thus converting the photons into thermal energy with large efficiency, allowing the usage of a light source to create a temperature gradient. The thermoelectric generator is responsible for the conversion of the generated temperature gradient into a potential voltage due to diffusion of the charge carriers from the hot side to the cold side in the material.

The wireless energy transfer system, now disclosed, comprises a photo-thermoelectric plasmonic system that generates a potential voltage when exposed to a light source. For instance, the photo-thermoelectric plasmonic system can be manufactured wherein the heat flow is parallel to the incident light, herewith also referred as vertical configuration, or wherein the heat flow is perpendicular to the incident light, herein also referred as planar configuration. Additionally, it can be manufactured wherein the heat flows through parallelly arranged thermoelectric structures, herewith also referred as parallel configuration, or wherein the heat flows through the radially arranged thermoelectric structures, herewith also referred as radial configuration. Furthermore, in the aforementioned configurations, the thermoplasmonic system is placed where the light is incident, corresponding to the hot side of the photo-thermoelectric plasmonic system.

The wireless energy transfer system, now disclosed, is based on a photo-thermoelectric plasmonic system, comprising a thermoelectric generator, which comprises diffusing charge carriers under an applied temperature gradient, and a plasmonic collector system, containing heating resonant nanostructures when exposed to light.

Along this text, it is considered that a temperature gradient is defined as a progressive temperature difference between metallic electrodes.

In an embodiment, the thermoelectric generator in the photo-thermoelectric plasmonic system is electrically connected ensuring the flow of the charge carriers from the hot side to the cold side of the photo-thermoelectric plasmonic system.

According to the invention, the thermoplasmonic system in the photo-thermoelectric plasmonic system is thermally connected to the thermoelectric circuit, whilst being electrically isolated from the thermoelectric circuit.

In an embodiment, the substrate is rigid, in particular being made of a material selected from a list consisting of glass, silica, cork, metal sheet, and combinations thereof.

In an embodiment, the substrate is flexible, in particular being made of a material selected from a list consisting of polyethylene terephthalate - PET, polyethylene naphthalate - PEN, polyethersulfone - PES, polyimide - PI, poly(4,4'-oxydiphenylene-pyromellitimide), polytetrafluoroethylene - PTFE, polypropylene - PP, poly(methyl methacrylate) - PMMA, polyvinyl chloride - PVC, latex, paper, rubber, a flexible sheet of cork, thin metal foil and combinations thereof.

In an embodiment, the thermoelectric generator of the photo-thermoelectric plasmonic system comprises metal oxide or silicide, organic material/polymer, inorganic semiconductors selected from a list consisting of bismuth and its alloys, lead telluride or its alloys, silicon-germanium alloys, skutterudites, clathrates or half-Heusler alloys, and their combinations thereof.

In an embodiment, the thermoplasmonic system of the photo-thermoelectric plasmonic system comprises a material selected from a list consisting of black-Silicon absorbed, silver nanoparticles, gold nanoparticles, SiO₂, Al₂O₃, carbon-based materials, periodic micro/nanostructures for ressonance at specified wavelength and their combinations thereof.

In an embodiment, the electrical contacts of the photo-thermoelectric plasmonic system comprises conductive materials selected from a list consisting of metallic layers comprising aluminium, gold, silver, copper, platinum and their combinations thereof.

In an embodiment, the thermoelectric generator and the thermoplasmonic system, and the electrical contacts are obtained by layer-by-layer deposition, screen printing, lithography, spray painting, inkjet printing, nanoimprint, sputtering deposition, ion beam deposition, electron beam deposition, chemical vapour deposition, dip-pad-dry process, chemical etching, or optical and mechanical patterning.

In an embodiment, the light source used in the wireless energy transfer system and incident on the photo-thermoelectric plasmonic system, is selected from a list consisting of laser, superluminescent diode (SLD), SLED, LEDs, OLEDs, sun light, their combination thereof and any other suitable light source.

In an embodiment, the wireless energy transfer system based on a photo-thermoelectric plasmonic system can be coupled inline to various ecosystems, namely mobility, connectivity, and remote exploration.

In an embodiment, the wireless energy transfer system based on a photo-thermoelectric plasmonic system comprises the incorporation of other types of energy harvesters by hybridization, like, for example, solar energy systems or magnetic induction.

An aspect of the present disclosure refers to a thermoplasmonic device for harvesting energy from incident light having at least one wavelength, the device comprising a thermoplasmonic layer for converting received light, by plasmonic resonance at said wavelength, to heat; a thermoelectric layer for generating electricity from the converted heat; wherein the thermoplasmonic layer and the thermoelectric layer are thermally connected to transmit the converted heat from the thermoplasmonic layer to the thermoelectric layer.

In an embodiment, the thermoplasmonic device comprises electrical contacts arranged for conducting generated electricity from the thermoelectric layer.

In an embodiment, the thermoplasmonic device comprises a substrate layer for supporting the thermoplasmonic device.

According to the invention, the thermoplasmonic layer and the thermoelectric layer of the thermoplasmonic device are electrically isolated between themselves.

According to the invention, the thermoplasmonic device comprises an insulator for electrically isolating the thermoplasmonic layer and the thermoelectric layer between themselves.

In an embodiment, the arrangement of the thermoplasmonic layer and the thermoelectric layer of the thermoplasmonic device are vertical and/or planar and/or parallel and/or radial, in particular the thermoelectric layer comprising thermoelectric elements arranged radially between a central hot region where the thermoplasmonic layer is located and a peripheral cold region where a cold source or heat diffuser is located; or arranged in parallel, each thermoelectric element being arranged between a hot region where the thermoplasmonic layer is located and a cold region where a cold source or heat diffuser is located.

In an embodiment, the thermoplasmonic layer of the thermoplasmonic device comprises resonant periodic structures for plasmonic heating when exposed to light.

Another aspect of the present disclosure refers to a wireless energy transfer system for transferring energy comprising the thermoplasmonic device previously mentioned and a light source for emitting incident light onto said device.

In an embodiment, the light source of the wireless energy transfer system is a temporally coherent light source.

In an embodiment, the light source of the wireless energy transfer system is selected from a list consisting of a high-power laser, laser, super luminescent light emitting diode, light emitting diode, organic light emitting diode, sun light and combinations thereof.

In an embodiment, the thermoelectric layer of the wireless energy transfer system comprises diffusing charge carriers under an applied temperature gradient between the thermoplasmonic layer and a cold source, in particular between the thermoplasmonic layer and a heat diffuser.

In an embodiment, the substrate of the wireless energy transfer system is made of a material selected from a list of: glass, silica, cork, metal sheet, and combinations thereof.

In an embodiment, the substrate of the wireless energy transfer system is made of a material selected from a list of: polyethylene terephthalate, polyethylene naphthalate, polyethersulfone, polyimide, poly(4,4'-oxydiphenylene-pyromellitimide), polytetrafluoroethylene, polypropylene, poly(methyl methacrylate), polyvinyl chloride, latex, paper, rubber, a flexible sheet of cork, thin metal foil and combinations thereof.

In an embodiment, the thermoelectric layer of the wireless energy transfer system is made of a material selected from a list of: metal oxide or silicide, metal chalcogenides, metalloids, organic material/polymer, inorganic semiconductors, bismuth and its alloys, telluride or its alloys, lead telluride, antimony telluride, silicon-germanium alloys, skutterudites, clathrates or half-Heusler alloys, and their combinations thereof.

In an embodiment, the thermoplasmonic layer of the wireless energy transfer system comprises periodic micro or nano structures for plasmonic resonance at said wavelength, said structures being made of a material selected from a list of: black silicon absorbed, silver nanoparticles, gold nanoparticles, SiO₂, Al₂O₃, carbon-based materials, and their combinations thereof.

In an embodiment, the electrical contacts of the wireless energy transfer system are metallic layers made of a material selected from a list of: aluminum, gold, silver, copper, carbon nanotubes, graphene, platinum, conductive polymers and their combinations thereof.

In an embodiment, the thermoelectric layer and thermoplasmonic layer, and electrical contact layer, if existing, of the wireless energy transfer system are obtained by layer-by-layer deposition, screen printing, lithography, spray painting, inkjet printing, nanoimprint, sputtering deposition, ion beam deposition, electron beam deposition, chemical vapour deposition, dip-pad-dry process, chemical etching, or optical and mechanical patterning.

In an embodiment, the thermoelectric layer of the wireless energy transfer system comprises thermoelectric legs with a height varying between 0.1 and 5 mm.

In an embodiment, the thermoplasmonic layer of the wireless energy transfer system comprises a plasmonic resonance material comprising an insulator periodic structure and topped by an electrically conducting coating.

In an embodiment, the thermoplasmonic layer of the wireless energy transfer system comprises a plasmonic resonance material comprising a flat insulator layer coated with a conductive periodic structure.

In an embodiment, the periodic structure of the wireless energy transfer system is performed by moulding, hot-melt, spin-coating, printing methods, nanoimprint, laser printing and inkjet.

In an embodiment, the light source of the wireless energy transfer system is focused or collimated to impinge on the thermoplasmonic device.

In an embodiment, the wireless energy transfer system further comprises solar energy or magnetic induction energy harvesters.

Another aspect of the present disclosure refers to a method of operation of the wireless energy transfer system comprising emitting incident light from said light source onto said thermoplasmonic device for wirelessly transferring energy, in particular for mobility, connectivity, and/or remote exploration systems.

### Brief Description of the Figures

The following figures provide preferred embodiments for illustrating the disclosure and should not be seen as limiting the scope of invention.
**Fig 1****.** illustrates a schematic 2D representation of an embodiment of a photo-thermoelectric plasmonic system for the wireless energy transfer system, with light incident (1) in the plasmonic structure (2), coupled to the thermoelectric structure (3).
**Fig. 2****.** illustrates a schematic representation of different possible embodiments for the photo-thermoelectric plasmonic system for the wireless energy transfer system. Different configurations are illustrated, such as, (a) vertical, (b) horizontal: (b.1) planar device and (b.2) radial device.
Fig. 3. illustrates a schematic representation of embodiments of the plasmonic structure for the photo-thermoelectric plasmonic system.

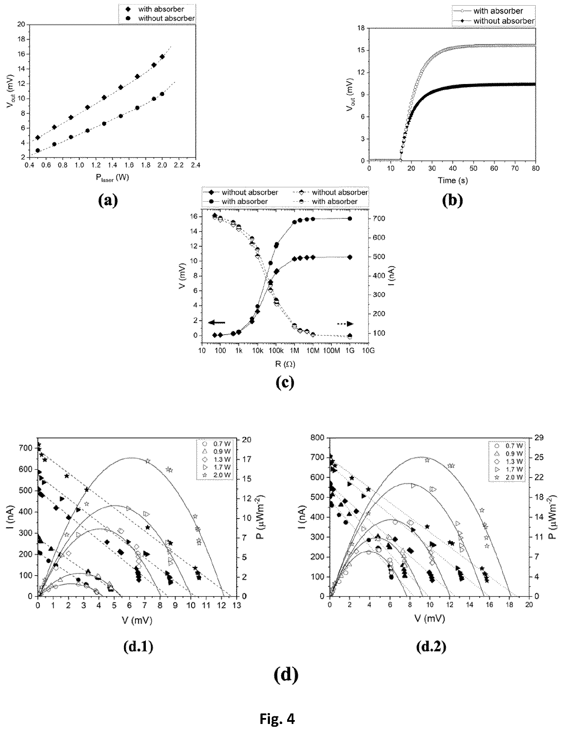

Fig. 4. shows a summary of graphic representations of the light absorber influence in the electrical characterization of one possible configuration of the explored embodiment: a hybrid photo-thermoelectric plasmonic system, in a radial horizontal configuration, with an incident IR laser beam. a) Device output voltage as a function of the laser power (PL). b) Device response when the laser is turned on, with a laser power of 2W, for the devices without and with the light absorber. c) Voltage and current generated by the two devices, without and with the light collector, as functions of a probe resistance, with a laser power of 2W. d) Full electrical characterization of the radial devices, i.e. generated voltage, current and power density, for different optical powers of IR Laser: d.1) without and d.2) with the light absorber.

Throughout the figures indicated above, the following elements are indicated with the respective references:
1 - Substrate;
2 - Plasmonic system;
3 - Light source;
4 - Electrical contacts;
5 - Thermoelectric stripes;
6 - Insulator layer;
7 - Conducting material.

### Detailed Description

The present disclosure refers to a wireless energy transfer system and respective use.

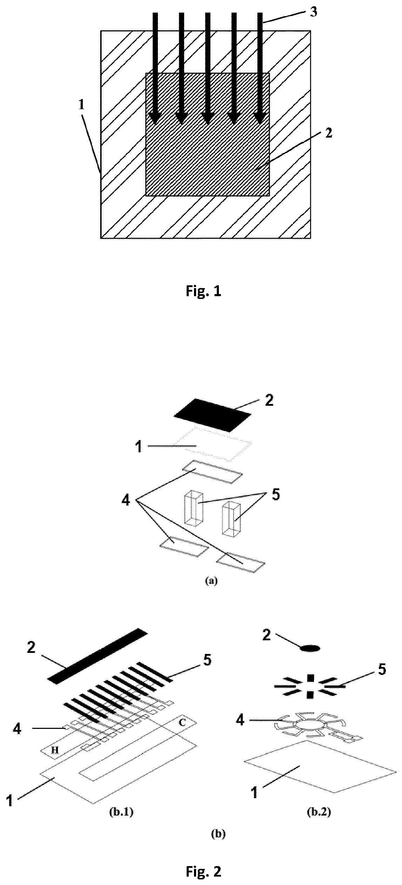

The photo-thermoelectric plasmonic system encompasses two important elements, namely the thermoplasmonic system and the thermoelectric generator, as displayed in Fig. 1. This technology surpasses other wireless energy transfer technologies known from the prior art, since it combines three distinct devices to produce a feasible equipment that is able to transfer energy in the form of light from the surface of the Earth up to satellites orbiting the Earth.

Fig. 1 shows a particular version of a photo-thermoelectric plasmonic system for the wireless energy transfer system. In this particular embodiment, the photo-thermoelectric plasmonic system is shown to have a light incident (3) and a plasmonic structure (2) that can be seen as a collector/absorber. The thermoelectric generator can take many different geometries. In this particular version, the thermoelectric generator is represented in a vertical configuration. In this configuration, the thermoelectric generator can take different area sizes and thickness, depending on the manufacturing design. Typical dimensions range from a few millimetres up to tens of centimetres in length and/or width. However, these sizes are optional. Room temperature operation thermoelectric generators are composed of Bismuth and Telluride chalcogenides material legs. Other particularly suitable materials may include other alloys, such as Lead Telluride and Half-Heusler alloys (e.g. NbFeSb and VFeSb), Skutterudites, which are composed of a rare-earth element, a transition metal and a metalloid, Oxide thermoelectrics, such as Zinc Oxide, among others. The choice of commercial thermoelectric generators of vertical geometry is still largely limited to room temperature performance materials, namely bismuth telluride (Bi₂Te₃ - n-type thermoelectric) and antimony telluride (Sb₂Te₃ -p-type thermoelectric) based materials. The thermoelectric generatorin the photo-thermoelectric plasmonic system can be manufactured with specific properties and materials to enhance its performance. Besides the thermoelectric materials, the structure of the legs may also vary, as well as the number of legs. Fig. 2 shows three different configurations of a possible thermoelectric used in the photo-thermoelectric plasmonic system. The three configurations show a varying number legs of the thermoelectric material, of both p-type and n-type semiconductor, or only one type (n or p). The number of legs is optional and there is not an upper limitation on the number of legs that can be used. The number of legs is dependent on the area of the collector/absorber and also on the individual size of each thermoelectric leg. Fig. 2 shows three different configurations of thermoelectric generator. In the case of a vertical configuration (a), the height of the thermoelectric legs can vary between 0.1 and 5 mm, preferably between 1 and 4 mm, more preferably between 2 and 3 mm. The thermoelectric generator is organised in modules of n-type and p-type semiconductors, which are electrically connected in series and thermally connected in parallel. The individual modules can alternatively be composed of one of the thermoelectric materials, either the p-type or the n-type, and a conductive material. In this particular case, the thermoelectric generator output would only be generated by one thermoelectric material.

In the case of the horizontal configuration (b), the thermoelectric legs may have a thickness ranging from a few nanometers up to several micrometres. For this particular configuration, the device requires a substrate (1), which is represented in Fig. 2 to be a thin flat material.

The shape and size of the thermoelectric legs in the horizontal configuration can be custom designed to the operation mode of the photo-thermoelectric plasmonic system. Fig. 2.b shows two possible designs. In the specific depicted version of Fig. 2.b.1, the thermoelectric legs are parallel to each other. The p-type thermoelectric material and the n-type thermoelectric material are alternate in order to compose the thermoelectric generator modules. The length of the legs is depicted as larger than the width. In the horizontal geometry, the thermal gradient between the hot side H and the cold size C is ensured by the leg length. The horizontal thermoelectric generators can be designed to have leg lengths between 5 mm and 10 cm, however these dimensions are optional, and should be tuned in accordance with the thermal gradient, the substrate material and the legs' materials. In the embodiment of Fig. 2.b.2, the thermoelectric generator is represented in a horizontal radial geometry. This design is suitable when the source of the thermal gradient takes a radial form, such as the case of point source of thermal energy, e.g. with focus or collimated beam laser.

The substrate material (1) can be any insulating flexible substrate, eg. PET, polyimide, paper, fabric, but it can also be rigid, such as a plastic, wood, glass, cement or ceramic. Additionally, the substrate can either be flat or, in other instances, take different surface shapes, such as spherical, cylindrical, conical, or any other curved shape. The process to apply the thermoelectric legs (5) to the substrate may include printing, physical vapour deposition, and any other coating processes. In a particular version, stencil printing of screen-printing may be employed to produce the thermoelectric using thermoelectric inks. thermoelectric inks are composed of thermoelectric particles, a binder and may include other additives to obtain certain properties, such as anti-foaming, flowability, etc. Suitable thermoelectric particles include metal chalcogenides (Bi₂Te₃, SnTe, PbTe, etc.), metal oxides (ZnO, etc.), Half-Heuslers (HfCoSb, etc.), metal silicides (Mg₂Si, etc.), clathrates (Ba₈Ga₁₆Si₃₀, Ba₈Si₁₆Si₃₀, etc.), metalloids (Te, others) and skutterudites(CoSb₃, FeSb₃, etc.); binders may be PEDOT ((Poly(3,4-ethylenedioxythiophene)), PEDOT:PSS (poly(3,4-ethylenedioxythiophene) polystyrene sulfonate), PANi (Polyaniline), P3HT (poly(3-hexylthiophene-2,5-diyl)), P3BT (Poly(3-butylthiophene-2,5-diyl)), P3DDT (Poly(3-dodecylthiophene-2,5-diyl)), PA (polyamide), BBL (Poly(benzimidazobenzophenanthroline), Poly[Kx(Ni-ett)] (poly[Kx(Ni-ethylenetetrathiolate), PVA (Poly(vinyl alcohol)), PVP (Polyvinylpyrrolidone), etc.; and additives could be a-Terpineol, glycerol, Ethylene glycol, DMSO (Dimethyl sulfoxide), ethanol, among other suitable options.

In a particular example of a thermoelectric generator, as depicted in Fig. 2b.1, the thermoelectric inks can be printed on a polyimide substrate (1), using stencil printing. The application of conductive electrodes (4) is also necessary for the functioning of the thermoelectric generator. The achievable thickness of the thermoelectric inks using printing techniques such as stencil printing, screen printing, ink-jet printing, and others ranges from hundreds of nanometers up to hundreds of micrometres.

In a different version of the thermoelectric, the material of the legs can be evaporated onto a flexible PET substrate. Other processes to deposit thin films on many different substrates include, but are not limited to, sputtering deposition, laser ablation, ion-beam deposition, etc. These methods may be coupled to photolithography processes to achieve the desired geometry. Using these particular methods, the thickness that can be achieved is in the nanometer range.

In some instances, several thermoelectric generators can be coupled to generate a higher output. Arrays of thermoelectric generators can be manufactured with vertical (a) or horizontal (b) thermoelectric generators. The goal of thermoelectric generator arrays is to maximise the use of the available thermal gradient, while ensuring that the electrical power output is also maximised. Examples of arrays of thermoelectric generators include stacked thermoelectric generators, series-parallel modules and other custom-made arrays.

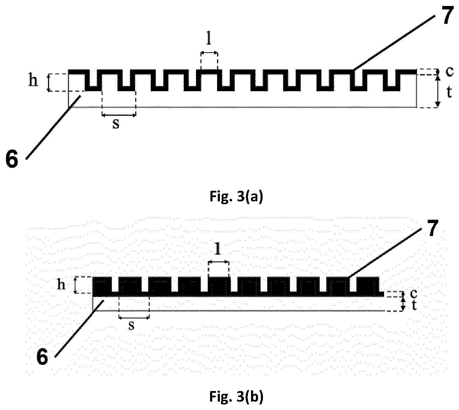

Fig. 3 shows a particular version of a plasmonic resonance material used in the thermoplasmonic system. The combination of the two materials ensures the top is marked by a periodic and homogeneous pattern. In this particular embodiment of fig. 3(a), the device is composed of an insulator periodic structure (6), and topped by an electrically conducting coating (7). In another version of fig. 3(b), the device is composed of a flat insulator layer (6) coated with a periodic conductive structure (7). The dimensions of the insulator (6) shown in Fig. 3(a) are defined by a thickness t and a spacing s. Conversely, the conductor (7) shown in Fig. 3(b) is defined by a thickness c and a spacing s. These dimensions are variable, they can and must be tuned according to the light source wavelength, which can be practically any kind of light source wavelength. In a specific embodiment, a pulsed light source wavelength above 1000 nm can be used.

The insulator material (6) is the base of the thermoplasmonic system. It ensures electrical insulation between the conductive material of the thermoplasmonic system and the thermoelectric generator below. Suitable materials include any plastic, such as PET, polyimide, polyamide, polyester, polyurethane, PDMS, PVDF, among others, and ceramic. The fabrication of the periodic structures can be performed by moulding, hot-melt, spin-coating and printing methods, such as nanoimprint, laser printing and inkjet. The typical thickness values of the insulating layer (6) ranges between 250 µm and 1 mm, preferably between 400 µm and 800 µm, more preferably between 450 µm and 600 µm, such that they are thin enough that the heat flows unrestrainedly between the conducting material (7) and the thermoelectric generator or substrate, but thick enough to ensure that the thermoelectric generator and the top conductive layer (7) are electrically insulated from each other. The periodic structure represented in Fig. 3 is composed of square prisms with base of side I and height h. This structure, however, is optional. Alternative dimensions can be used, ranging from 2 µm to 10 µm, and h ranging from 5 µm to 50 µm. Additionally, the periodic structures can take different shapes. Suitable structures include cubes, spheres, pyramids, cones and other prisms.

The conductor (7) is responsible for the reflection / scattering of the incident light. Suitable materials for this application are metals, such as Au, Al, Ta, Cu, among others. The thickness of the conductive layer (7) is at least one order of magnitude smaller than the insulator layer (6). Suitable thickness values range between a few nanometers up to hundreds of nanometers. This range of thickness can be achieved by using physical vapour deposition techniques, such as evaporation, sputtering, ion beam, laser ablation, and others. Additionally, the use of a conductive material is also optional, as insulator materials have also shown to produce the plasmonic effect.

The area of the plasmonic device (Fig.2 - 2) should be designed according to the incident area of the light source (Fig.1 - 3). It should cover as much of the area of the incident light as possible. The tuned incident laser light (Fig.1 - 3) on the plasmonic resonance material (Fig.2 - 2) is converted to heat, which in turn powers the thermoelectric generator. In its turn, the thermoelectric generator should be designed to maximise the use of the heat generated by the plasmonic material, such that the hot area of the thermoelectric generator should occupy the area of the plasmonic material.

In the particular version shown in Fig. 3, there is an insulator layer (6), that composes a periodic step structure. Additionally, there is a conducting material (7), that has a thickness c. The periodic structure is characterised by a structure period s, the thickness of the structures h, the thickness of the insulator layer t, and the plane dimension of the structure l. The dimensions of the periodic structure ensure that the plasmonic device is sensitive to incident light with a specific wavelength. In an alternative version of the thermoplasmonic system, the insulator material (6) can take a flat surface, while the conducting material (7) defines the periodic structure.

The periodic structure on the surface of the thermoplasmonic system can be established either by the insulator (6) or the conductor (7). In the case of the insulator (6), the pattern can be obtained using mould casting, nano-imprint, inkjet printing, among other printing techniques. In the case of the conductor (7), the patterns can be achieved by coupling the physical vapour deposition techniques with photolithography, mask alignment, among others. Alternatively, nanoparticle dispersions, composed of spheres, or nanorods, or other shapes, can be used to coat the insulating layer, while ensuring a periodic structure on the surface.

An example of an operating photo-thermoelectric plasmonic system is illustrated in Fig. 4. Considering a horizontal radial thermoelectric generator on a polyimide substrate, consisting of 8 thermoelectric modules, produced with Bi₂Te₃ thermoelectric ink as the p-type thermoelectric material (Seebeck coefficient 33 µVK-1) and using Ag ink (Silver Electron VFP Ink Technologies) in place of the n-type thermoelectric material, printed via stencil printing. The thermoelectric legs have dimensions of 2.5 mm x 8 mm. In place of the plasmonic material, two options were considered: the absence of an absorbing material, i.e. the laser is incident on the substrate, and the use of a simple absorbing carbon-based commercial ink, such as Bectron^{®} GP 9553VP from Elantas. As the incident light source, a high-power IR laser with a wavelength of 1450 nm and operating power of 2W was used. With this configuration, the obtained thermal gradients were ΔTmax ~ 40 K and ΔTmax ~ 60 K (Fig. 4 a), respectively without the absorber and with the absorber. The maximum power generated by the photo-thermoelectric plasmonic system, without a light absorber and with a carbon-based light absorber, was respectively 11mV and 16mV (Fig. 4 b). The use of a light absorber enhances the performance of the photo-thermoelectric plasmonic system. In this regard, the use of a plasmonic material will further enhance the output of the photo-thermoelectric plasmonic system under these conditions. A maximum output power was achieve of ~ 25 µW m⁻² with absorver higher than the ~ 17 µW m⁻² without absorver (Fig. 4 d).

In an embodiment, the wireless energy transfer system comprises an emitter laser device which can operate at practically any wavelength, from a few nm up to thousands of nm. On the opposite side of said system is a receiver, comprising of a plasmonic material, i.e. a highly absorbing material, that absorbs light and then converts it into heat. This heat from the absorption or plasmonic effect is then converted into electrical energy by the thermoelectric system.

The term "comprising" whenever used in this document is intended to indicate the presence of stated features, integers, steps, components, but not to preclude the presence or addition of one or more other features, integers, steps, components or groups thereof.

The disclosure should not be seen in any way restricted to the embodiments described and a person with ordinary skill in the art will foresee many possibilities to modifications thereof. The above-described embodiments are combinable.

The following claims further set out particular embodiments of the disclosure.

## Claims

1. Thermoplasmonic device for harvesting energy from incident light having at least one wavelength, the device comprising:
a thermoplasmonic layer (2) for converting received light, by plasmonic resonance at said wavelength, to heat;
a thermoelectric layer (5) for generating electricity from the converted heat;
wherein the thermoplasmonic layer and the thermoelectric layer are thermally connected to transmit the converted heat directly from the thermoplasmonic layer to the thermoelectric layer;
wherein the thermoplasmonic layer and the thermoelectric layer comprise an insulating layer (6) for electrically isolating the thermoplasmonic layer and the thermoelectric layer between themselves, while maintaining a direct thermal connection between said thermoplasmonic layer and the thermoelectric layer;
wherein the insulating layer comprises a thickness ranging between 250 µm and 1 mm;
wherein the thermoplasmonic layer comprises resonant periodic structures for plasmonic heating when exposed to light.

2. Thermoplasmonic device according to the previous claim comprising electrical contacts (4) arranged for conducting generated electricity from the thermoelectric layer.

3. Thermoplasmonic device according to any of the previous claims comprising a substrate layer (1) for supporting the thermoplasmonic device.

4. Thermoplasmonic device according to any of the previous claims, wherein the arrangement of the thermoplasmonic layer and the thermoelectric layer is vertical and/or planar and/or parallel and/or radial, in particular the thermoelectric layer comprising thermoelectric elements arranged radially between a central hot region where the thermoplasmonic layer is located and a peripheral cold region where a cold source or heat diffuser is located; or arranged in parallel, each thermoelectric element being arranged between a hot region where the thermoplasmonic layer is located and a cold region where a cold source or heat diffuser is located.

5. Thermoplasmonic device according to any of the previous claims, wherein the thermoplasmonic layer comprises a plasmonic resonance material comprising an insulator periodic structure and topped by an electrically conducting coating, being said periodic structure preferably performed by moulding, hot-melt, spin-coating, printing methods, nanoimprint, laser printing and inkjet or further comprising a plasmonic resonance material comprising a flat insulator layer coated with a conductive periodic structure.

6. Wireless energy transfer system for transferring energy comprising the thermoplasmonic device described in any of the previous claims, and a light source for emitting incident light onto said device, preferably being said light source (3) focused or collimated to impinge on the thermoplasmonic device, more preferably a temporally coherent light source and even more preferably a light source selected from a list consisting of a high-power laser, laser, super luminescent light emitting diode, light emitting diode, organic light emitting diode, sun light and combinations thereof.

7. Wireless energy transfer system according to the previous claim, wherein the thermoelectric layer comprises diffusing charge carriers under an applied temperature gradient between the thermoplasmonic layer and a cold source, in particular between the thermoplasmonic layer and a heat diffuser.

8. Wireless energy transfer system according to any of the previous claims 6 to 7, wherein the substrate is made of a material selected from a list of: glass, silica, cork, metal sheet, and combinations thereof or the substrate is made of a material selected from a list of: polyethylene terephthalate, polyethylene naphthalate, polyethersulfone, polyimide, poly(4,4'-oxydiphenylene-pyromellitimide), polytetrafluoroethylene, polypropylene, poly(methyl methacrylate), polyvinyl chloride, latex, paper, rubber, a flexible sheet of cork, thin metal foil and combinations thereof.

9. Wireless energy transfer system according to any of the previous claims 6 to 8, wherein the thermoelectric layer is made of a material selected from a list of: metal oxide or silicide, metal chalcogenides, metalloids, organic material/polymer, inorganic semiconductors, bismuth and its alloys, telluride or its alloys, lead telluride, antimony telluride, silicon-germanium alloys, skutterudites, clathrates or half-Heusler alloys, and their combinations thereof, preferably being obtained by layer-by-layer deposition, screen printing, lithography, spray painting, inkjet printing, nanoimprint, sputtering deposition, ion beam deposition, electron beam deposition, chemical vapour deposition, dip-pad-dry process, chemical etching, or optical and mechanical patterning.

10. Wireless energy transfer system according to any of the previous claims 6 to 9, wherein the thermoplasmonic layer comprises periodic micro or nano structures for plasmonic resonance at said wavelength, said structures being made of a material selected from a list of: black silicon absorbed, silver nanoparticles, gold nanoparticles, SiO₂, Al₂O₃, carbon-based materials, and their combinations thereof, preferably being obtained by layer-by-layer deposition, screen printing, lithography, spray painting, inkjet printing, nanoimprint, sputtering deposition, ion beam deposition, electron beam deposition, chemical vapour deposition, dip-pad-dry process, chemical etching, or optical and mechanical patterning.

11. Wireless energy transfer system according to any of the previous claims 6 to 10, wherein the electrical contacts are metallic layers made of a material selected from a list of: aluminum, gold, silver, copper, carbon nanotubes, graphene, platinum, conductive polymers and their combinations thereof, preferably being obtained by layer-by-layer deposition, screen printing, lithography, spray painting, inkjet printing, nanoimprint, sputtering deposition, ion beam deposition, electron beam deposition, chemical vapour deposition, dip-pad-dry process, chemical etching, or optical and mechanical patterning.

12. Wireless energy transfer system according to any of the previous claims 6 to 11, wherein the thermoelectric layer comprises thermoelectric legs with a height varying between 0.1 and 5 mm.

13. Wireless energy transfer system according to any of the previous claims 6 to 12, further comprising solar energy or magnetic induction energy harvesters.

14. Method of operation of the wireless energy transfer system of any of the claims 6-13 comprising emitting incident light from said light source onto said thermoplasmonic device for wirelessly transferring energy, in particular for mobility, connectivity, and/or remote exploration systems.

## Patentansprüche

1. Thermoplasmonische Vorrichtung zur Gewinnung von Energie aus einfallendem Licht mit mindestens einer Wellenlänge, wobei die Vorrichtung umfasst:
eine thermoplasmonische Schicht (2) zur Umwandlung von empfangenem Licht durch plasmonische Resonanz mit der genannten Wellenlänge in Wärme;
eine thermoelektrische Schicht (5) zur Erzeugung von Strom aus der umgewandelten Wärme;
wobei die thermoplasmonische Schicht und die thermoelektrische Schicht thermisch miteinander verbunden sind, um die umgewandelte Wärme direkt von der thermoplasmonischen Schicht an die thermoelektrische Schicht weiterzuleiten;
wobei die thermoplasmonische Schicht und die thermoelektrische Schicht eine Isolierschicht (6) umfassen, um die thermoplasmonische Schicht und die thermoelektrische Schicht elektrisch voneinander zu isolieren, wobei eine direkte thermische Verbindung zwischen der genannten thermoplasmonischen Schicht und der thermoelektrischen Schicht aufrechterhalten wird;
wobei die Isolierschicht eine Dicke zwischen 250 µm und 1 mm aufweist;
wobei die thermoplasmonische Schicht periodische Resonanzstrukturen umfasst, die bei Lichteinfall eine plasmonische Erwärmung bewirken.

2. Thermoplasmonische Vorrichtung nach dem vorangehenden Anspruch, umfassend elektrische Kontakte (4), die so angeordnet sind, dass sie den in der thermoelektrischen Schicht erzeugten Strom leiten.

3. Thermoplasmonische Vorrichtung nach einem der vorangehenden Ansprüche, umfassend eine Substratschicht (1) als Träger der thermoplasmonischen Vorrichtung.

4. Thermoplasmonische Vorrichtung nach einem der vorangehenden Ansprüche, wobei die Anordnung der thermoplasmonischen Schicht und der thermoelektrischen Schicht vertikal und/oder eben und/oder parallel und/oder radial ist, wobei die thermoelektrische Schicht insbesondere thermoelektrische Elemente umfasst, die radial zwischen einem zentralen Heißbereich, in dem sich die thermoplasmonische Schicht befindet, und einem peripheren Kaltbereich, in dem sich eine Kältequelle oder ein Wärmeverteiler befindet, angeordnet sind; oder parallel angeordnet sind, wobei jedes thermoelektrische Element zwischen einem Heißbereich, in dem sich die thermoplasmonische Schicht befindet, und einem Kaltbereich, in dem sich eine Kältequelle oder ein Wärmeverteiler befindet, angeordnet ist.

5. Thermoplasmonische Vorrichtung nach einem der vorangehenden Ansprüche, wobei die thermoplasmonische Schicht ein plasmonisches Resonanzmaterial umfasst, das eine periodische Isolatorstruktur aufweist und mit einer elektrisch leitenden Beschichtung überzogen ist, wobei die genannte periodische Struktur bevorzugt durch Formpressen, Schmelzkleben, Rotationsbeschichtung, Druckverfahren, Nanoprägen, Laserdruck und Tintenstrahldruck hergestellt wird, oder ferner ein plasmonisches Resonanzmaterial umfasst, das eine flache Isolierschicht umfasst, die mit einer leitenden periodischen Struktur beschichtet ist.

6. System zur drahtlosen Energieübertragung, umfassend die in einem der vorangehenden Ansprüche beschriebene thermoplasmonische Vorrichtung sowie eine Lichtquelle zum Aussenden von einfallendem Licht auf die genannte Vorrichtung, wobei die genannte Lichtquelle (3) bevorzugt fokussiert oder kollimiert ist, um auf die thermoplasmonische Vorrichtung zu treffen; besonders bevorzugt eine zeitlich kohärente Lichtquelle ist und ganz besonders bevorzugt eine Lichtquelle, die aus einer Liste ausgewählt ist, umfassend einen Hochleistungslaser, einen Laser, eine superlumineszierende Leuchtdiode, eine Leuchtdiode, eine organische Leuchtdiode, Sonnenlicht und Kombinationen davon.

7. System zur drahtlosen Energieübertragung nach dem vorangehenden Anspruch, wobei die thermoelektrische Schicht Ladungsträger umfasst, die unter einem angelegten Temperaturgradienten zwischen der thermoplasmonischen Schicht und einer Kältequelle, insbesondere zwischen der thermoplasmonischen Schicht und einem Wärmeverteiler, diffundieren.

8. System zur drahtlosen Energieübertragung nach einem der vorangehenden Ansprüche 6 bis 7, wobei das Substrat aus einem Material besteht, das aus einer Liste ausgewählt ist, die Folgendes umfasst: Glas, Siliziumdioxid, Kork, Blech und Kombinationen davon, oder das Substrat aus einem Material besteht, das aus einer Liste ausgewählt ist, die Folgendes umfasst: Polyethylenterephthalat, Polyethylennaphthalat, Polyethersulfon, Polyimid, Poly(4,4'-Oxydiphenylen-Pyromellitimid), Polytetrafluorethylen, Polypropylen, Poly(Methylmethacrylat), Polyvinylchlorid, Latex, Papier, Gummi, eine flexible Korkplatte, eine dünne Metallfolie und Kombinationen davon.

9. System zur drahtlosen Energieübertragung nach einem der vorangehenden Ansprüche 6 bis 8, wobei die thermoelektrische Schicht aus einem Material besteht, das aus einer Liste ausgewählt ist, die Folgendes umfasst: Metalloxide oder Silizid, Metallchalkogenide, Metalloide, organische Materialien/Polymere, anorganische Halbleiter, Bismut und dessen Legierungen, Tellurid oder dessen Legierungen, Bleitellurid, Antimontellurid, Silizium-Germanium-Legierungen, Skutterudite, Clathrate oder Halb-Heusler-Legierungen sowie Kombinationen davon, bevorzugt durch schichtweise Abscheidung, Siebdruck, Lithografie, Sprühlackierung, Tintenstrahldruck, Nanoprägung, Kathodenzerstäubung (Sputtern), Ionenstrahlabscheidung, Elektronenstrahlabscheidung, chemische Gasphasenabscheidung, Tauch-, Foulardier- und Trocknungsverfahren (*dip-pad-dry process*), chemisches Ätzen oder optische und mechanische Strukturierung hergestellt.

10. System zur drahtlosen Energieübertragung nach einem der vorangehenden Ansprüche 6 bis 9, wobei die thermoplasmonische Schicht periodische Mikro- oder Nanostrukturen für eine plasmonische Resonanz bei der genannten Wellenlänge umfasst, wobei die genannte Strukturen aus einem Material bestehen, das aus einer Liste ausgewählt ist, die Folgendes umfasst: Absorber aus schwarzem Silizium, Silbernanopartikel, Goldnanopartikel, SiO₂, AI₂O₃, Materialien auf Kohlenstoffbasis sowie Kombinationen davon, bevorzugt durch schichtweise Abscheidung, Siebdruck, Lithografie, Sprühlackierung, Tintenstrahldruck, Nanoprägung, Kathodenzerstäubung (Sputtern), Ionenstrahlabscheidung, Elektronenstrahlabscheidung, chemische Gasphasenabscheidung, Tauch-, Foulardier- und Trocknungsverfahren (*dip-pad-dry process*), chemisches Ätzen oder optische und mechanische Strukturierung hergestellt.

11. System zur drahtlosen Energieübertragung nach einem der vorangehenden Ansprüche 6 bis 10, wobei die elektrischen Kontakte metallische Schichten aus einem Material sind, das aus einer Liste ausgewählt ist, die Folgendes umfasst: Aluminium, Gold, Silber, Kupfer, Kohlenstoffnanoröhren, Graphen, Platin, leitfähige Polymere und Kombinationen davon, bevorzugt durch schichtweise Abscheidung, Siebdruck, Lithografie, Sprühlackierung, Tintenstrahldruck, Nanoprägung, Kathodenzerstäubung (Sputtern), Ionenstrahlabscheidung, Elektronenstrahlabscheidung, chemische Gasphasenabscheidung, Tauch-, Foulardier- und Trocknungsverfahren (*dip-pad-dry process*), chemisches Ätzen oder optische und mechanische Strukturierung hergestellt.

12. System zur drahtlosen Energieübertragung nach einem der vorangehenden Ansprüche 6 bis 11, wobei die thermoelektrische Schicht thermoelektrische Elemente mit einer Höhe zwischen 0,1 und 5 mm umfasst.

13. System zur drahtlosen Energieübertragung nach einem der vorangehenden Ansprüche 6 bis 12, ferner umfassend Energieernter für Solarenergie oder durch magnetische Induktion gewonnene Energie.

14. Verfahren zum Betrieb des drahtlosen Energieübertragungssystems nach einem der Ansprüche 6-13, umfassend das Aussenden von einfallendem Licht von der genannten Lichtquelle auf die thermoplasmonische Vorrichtung, um Energie drahtlos zu übertragen, insbesondere für Mobilitäts-, Konnektivitäts- und/oder Fernerkundungssysteme.

## Revendications

1. Dispositif thermoplasmonique destiné à recueillir de l'énergie à partir d'une lumière incidente ayant au moins une longueur d'onde, le dispositif comprenant :
une couche thermoplasmonique (2) destinée à convertir la lumière reçue, par résonance plasmonique à ladite longueur d'onde, en chaleur ;
une couche thermoélectrique (5) destinée à générer de l'électricité à partir de la chaleur convertie ;
dans lequel la couche thermoplasmonique et la couche thermoélectrique sont thermiquement reliées pour transmettre la chaleur convertie directement de la couche thermoplasmonique à la couche thermoélectrique ;
dans lequel la couche thermoplasmonique et la couche thermoélectrique comprennent une couche isolante (6) destinée à isoler électriquement la couche thermoplasmonique et la couche thermoélectrique entre elles, tout en maintenant une liaison thermique directe entre ladite couche thermoplasmonique et la couche thermoélectrique ;
dans lequel la couche isolante comprend une épaisseur située entre 250 µm et 1 mm ;
dans lequel la couche thermoplasmonique comprend des structures périodiques résonantes pour le chauffage plasmonique lorsqu'elles sont exposées à la lumière.

2. Dispositif thermoplasmonique selon la revendication précédente comprenant des contacts électriques (4) disposés pour conduire l'électricité générée à partir de la couche thermoélectrique.

3. Dispositif thermoplasmonique selon l'une quelconque des revendications précédentes comprenant une couche de substrat (1) pour supporter le dispositif thermoplasmonique.

4. Dispositif thermoplasmonique selon l'une quelconque des revendications précédentes, dans lequel la disposition de la couche thermoplasmonique et de la couche thermoélectrique est verticale et/ou planaire et/ou parallèle et/ou radiale, la couche thermoélectrique comprenant particulièrement des éléments thermoélectriques disposés radialement entre une zone chaude centrale où la couche thermoplasmonique est située et une zone périphérique froide où une source de froid ou un diffuseur de chaleur est situé ; ou disposés en parallèle, chaque élément thermoélectrique étant disposé entre une zone chaude où la couche thermoplasmonique est située et une zone froide où une source de froid ou un diffuseur de chaleur est situé.

5. Dispositif thermoplasmonique selon l'une quelconque des revendications précédentes, dans lequel la couche thermoplasmonique comprend un matériau de résonance plasmonique comprenant une structure périodique d'isolation et recouvert d'un revêtement électriquement conducteur, ladite structure périodique étant préférablement créée par moulage, thermofusion, revêtement par centrifugation, procédés d'impression, nano-impression, impression laser et par jet d'encre, ou comprenant également un matériau de résonance plasmonique comprenant une couche isolante plane revêtue d'une structure périodique conductrice.

6. Système de transfert d'énergie sans fil destiné à transférer de l'énergie comprenant le dispositif thermoplasmonique décrit dans l'une quelconque des revendications précédentes, et une source lumineuse pour émettre de la lumière incidente sur ledit dispositif, ladite source lumineuse (3) étant préférablement focalisée ou collimatée pour empiéter sur le dispositif thermoplasmonique, plus préférablement une source lumineuse temporellement cohérente et encore plus préférablement une source lumineuse choisie parmi une liste consistant en un laser à haute puissance, un laser, une diode électroluminescente super luminescente, une diode électroluminescente, une diode électroluminescente organique, de la lumière solaire et des combinaisons de ceux-ci.

7. Système de transfert d'énergie sans fil selon la revendication précédente, dans lequel la couche thermoélectrique comprend des porteurs de charge qui diffusent sous un gradient de température appliqué entre la couche thermoplasmonique et une source de froid, en particulier entre la couche thermoplasmonique et un diffuseur de chaleur.

8. Système de transfert d'énergie sans fil selon l'une quelconque des revendications précédentes 6 à 7, dans lequel le substrat est fait d'un matériau choisi parmi une liste consistant en : verre, silice, liège, tôle, et des combinaisons de ceux-ci, ou le substrat est fait d'un matériau choisi parmi une liste consistant en : polyéthylène téréphtalate, naphtalate de polyéthylène, polyéthersulfone, polyimide, poly(4,4'-oxydiphénylène-pyromellitimide), polytétrafluoroéthylène, polypropylène, polyméthacrylate de méthyle, chlorure de polyvinyle, latex, papier, caoutchouc, une feuille de liège flexible, feuille métallique fine et des combinaisons de ceux-ci.

9. Système de transfert d'énergie sans fil selon l'une quelconque des revendications précédentes 6 à 8, dans lequel la couche thermoélectrique est faite d'un matériau choisi parmi une liste consistant en : oxyde ou siliciure métallique, chalcogénure de métal, métalloïdes, matériau/polymère organique, semi-conducteurs inorganiques, bismuth et ses alliages, tellurure ou ses alliages, tellurure de plomb, tellurure d'antimoine, alliage silicium-germanium, skuttérudites, clathrates ou alliage demi-Heusler, et des combinaisons de ceux-ci, étant préférablement obtenue par dépôt couche par couche, sérigraphie, lithographie, peinture par pulvérisation, impression par jet d'encre, nano-impression, dépôt par pulvérisation cathodique, dépôt par faisceau ionique, dépôt par faisceau d'électrons, dépôt chimique en phase vapeur, procédé d'immersion, d'essorage et de séchage, gravure chimique, ou structuration optique et mécanique.

10. Système de transfert d'énergie sans fil selon l'une quelconque des revendications précédentes 6 à 9, dans lequel la couche thermoplasmonique comprend des structures périodiques micro ou nano pour une résonance plasmonique à ladite longueur d'onde, lesdites structures étant faites d'un matériau choisi parmi une liste consistant en : silicium noir absorbé, nanoparticules d'argent, nanoparticules d'or, SiO₂, Al₂O₃, matériaux à base de carbone, et des combinaisons de ceux-ci, étant préférablement obtenue par dépôt couche par couche, sérigraphie, lithographie, peinture par pulvérisation, impression par jet d'encre, nano-impression, dépôt par pulvérisation cathodique, dépôt par faisceau ionique, dépôt par faisceau d'électrons, dépôt chimique en phase vapeur, procédé d'immersion, d'essorage et de séchage, gravure chimique, ou structuration optique et mécanique.

11. Système de transfert d'énergie sans fil selon l'une quelconque des revendications précédentes 6 à 10, dans lequel les contacts électriques sont des couches métalliques faites d'un matériau choisi parmi une liste consistant en : aluminium, or, argent, cuivre, nanotubes de carbone, graphène, platine, polymères conducteurs et des mélanges de ceux-ci, étant préférablement obtenus par dépôt couche par couche, sérigraphie, lithographie, peinture par pulvérisation, impression par jet d'encre, nano-impression, dépôt par pulvérisation cathodique, dépôt par faisceau ionique, dépôt par faisceau d'électrons, dépôt chimique en phase vapeur, procédé d'immersion, d'essorage et de séchage, gravure chimique, ou structuration optique et mécanique.

12. Système de transfert d'énergie sans fil selon l'une quelconque des revendications précédentes 6 à 11, dans lequel la couche thermoélectrique comprend des piliers thermoélectriques d'une hauteur située entre 0,1 et 5 mm.

13. Système de transfert d'énergie sans fil selon l'une quelconque des revendications précédentes 6 à 12, comprenant également des récolteurs d'énergie solaire ou d'énergie par induction magnétique.

14. Procédé de fonctionnement du système de transfert d'énergie sans fil de l'une quelconque des revendications 6-13 comprenant l'émission d'une lumière incidente à partir de ladite source lumineuse sur ledit dispositif thermoplasmonique pour transférer de l'énergie sans fil, en particulier pour des systèmes de mobilité, de connectivité et/ou d'exploration à distance.
